# EUROPEAN PATENT APPLICATION

(11) **EP 4 484 479 A1**
(43) Date of publication of application: **01.01.2025**
(21) Application number: 23182642.1
(22) Date of filing: 30.06.2023
(51) Int. Cl.: C08K 3/22, C08L 69/00, B41M 5/26

(54) **TRANSPARENT THERMOPLASTIC COMPOSITIONS FOR LASER DIRECT STRUCTURING APPLICATIONS**

(71) Applicant: SHPP Global Technologies B.V., 4612 PX Bergen op Zoom (NL)
(72) Inventor: DU, Yinlong, Shanghai (CN); SONG, Shijie, Shanghai (CN)
(74) Representative: Modiano, Gabriella Diana

(57) **Abstract**

A thermoplastic composition includes: from about 60 wt% to about 99.5 wt% of at least one thermoplastic polymer; and from about 0.5 wt% to about 5 wt% of a laser direct structuring (LDS) additive comprising blue indium tin oxide (BITO). The thermoplastic composition has a visible transmittance of at least 50% and a haze of 30% or lower as tested in accordance with ASTM D1003-00 at a thickness of 1 millimeter. The combined weight percent value of all components does not exceed 100 wt%, and all weight percent values are based on the total weight of the composition.

## Description

### FIELD OF THE DISCLOSURE

The present disclosure relates to thermoplastic compositions suitable for use in laser direct structuring (LDS) applications, and in particular to transparent thermoplastic compositions that include blue indium tin oxide (BITO).

### BACKGROUND OF THE DISCLOSURE

Laser direct structuring (LDS) metallization technology offers a high degree of design freedom, miniaturization and weight reduction, high circuit precision, and simplified processing steps. As a result, this technology has been widely accepted for fabricating electrically conductive patterns, and a variety of LDS capable thermoplastics have been developed in the past decades. Normally, the metallization process of an electronic device fabricated by LDS thermoplastic includes (1) injection molding, (2) laser activation and structuring, (3) chemical metallization, and (4) assembly. The laser activation process includes a laser sensitizer (LDS additive) in the composition, which provides high laser absorption and catalytic sites for activation. Accordingly, most commercially available LDS additives such as copper chromium oxide spinel and copper hydroxyl phosphate have strong absorption and are black in color. Unfortunately, these features limit the transparency and color space of finished LDS compounds.

These and other shortcomings are addressed by aspects of the present disclosure.

### SUMMARY

Aspects of the disclosure relate to thermoplastic compositions including: from about 60 wt% to about 99.5 wt% of at least one thermoplastic polymer; and from about 0.5 wt% to about 5 wt% of a laser direct structuring (LDS) additive comprising blue indium tin oxide (BITO). The thermoplastic composition has a visible transmittance of at least 50% and a haze of 30% or lower as tested in accordance with ASTM D1003-00 at a thickness of 1 millimeter. The combined weight percent value of all components does not exceed 100 wt%, and all weight percent values are based on the total weight of the composition.

### DETAILED DESCRIPTION

The present disclosure relates to LDS compositions with good transmittance in the visible to near infrared (NIR) region. The compositions include blue indium tin oxide (BITO), which in some forms is a fine powder semiconductor additive. The compositions may also include one or more base resins including polycarbonate (PC), amorphous (co)polyamides, amorphous (co)polyesters, polyetherimide (PEI), sulfone polymers (PSU, PES, PPSU), and polyarylate resin (PAR). In certain aspects the compositions have high transmittance (greater than 60%) at a thickness of 1 mm at wavelengths of from 400 nm to 900 nm. In further aspects compositions have low haze, good ductility and LDS plating performance properties. Compositions according to aspects described herein may be especially suitable in consumer electronics applications.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate" includes mixtures of two or more polycarbonate polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure relate to a thermoplastic composition including: from about 60 wt% to about 99.5 wt% of at least one thermoplastic polymer; and from about 0.5 wt% to about 5 wt% of a laser direct structuring (LDS) additive including blue indium tin oxide (BITO). The thermoplastic composition has a visible transmittance of at least 50% and a haze of 30% or lower as tested in accordance with ASTM D1003-00 at a thickness of 1 millimeter. The combined weight percent value of all components does not exceed 100 wt%, and all weight percent values are based on the total weight of the composition.

In certain aspects the composition includes from about 65 wt% to about 99.5 wt% of the at least one thermoplastic polymer, or from about 70 wt% to about 99.5 wt% of the at least one thermoplastic polymer, or from about 75 wt% to about 99.5 wt% of the at least one thermoplastic polymer, or from about 80 wt% to about 99.5 wt% of the at least one thermoplastic polymer, or from about 85 wt% to about 99.5 wt% of the at least one thermoplastic polymer, or from about 90 wt% to about 99.5 wt% of the at least one thermoplastic polymer, or from about 95 wt% to about 99.5 wt% of the at least one thermoplastic polymer.

In some aspects the at least one thermoplastic polymer includes polycarbonate (PC), polyamide (PA), polyester (PE), polyetherimide (PEI), polyphenylsufone (PPSU), polyethersulfone (PES), polysulfone (PSU), polyarylate (PAR), copolymers thereof, or combinations thereof.

In a particular aspect the at least one thermoplastic polymer includes a polycarbonate copolymer.

In further aspects the polycarbonate copolymer includes a polycarbonate-siloxane copolymer having a siloxane content of from about 5 wt% to about 25 wt%. As used herein, the term "polycarbonate-polysiloxane copolymer" is equivalent to polysiloxane-polycarbonate copolymer, polycarbonate-polysiloxane polymer, or polysiloxane-polycarbonate polymer. In various aspects, the polycarbonate-polysiloxane copolymer can be a block copolymer including one or more polycarbonate blocks and one or more polysiloxane blocks. The polysiloxane-polycarbonate copolymer includes polydiorganosiloxane blocks including structural units of the general formula (1) below: 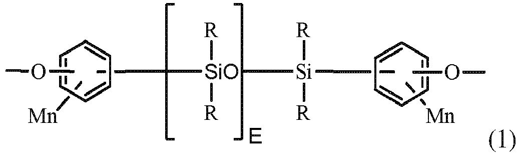 wherein the polydiorganosiloxane block length (E) is about 20 to about 60; wherein each R group can be the same or different, and is selected from a C₁₋₁₃ monovalent organic group; wherein each M can be the same or different, and is selected from a halogen, cyano, nitro, C₁-C₈ alkylthio, C₁-C₈ alkyl, C₁-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ aralkyl, C₇-C₁₂aralkoxy, C₇-C₁₂ alkylaryl, or C₇-C₁₂ alkylaryloxy, and where each n is independently 0, 1, 2, 3, or 4. The polysiloxane-polycarbonate copolymer also includes polycarbonate blocks including structural units of the general formula (2) below: 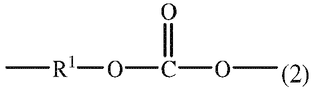 wherein at least 60 percent of the total number of R¹ groups include aromatic moieties and the balance thereof include aliphatic, alicyclic, or aromatic moieties. Polysiloxanepolycarbonates materials include materials disclosed and described in U.S. Patent No. 7,786,246, which is hereby incorporated by reference in its entirety for the specific purpose of disclosing various compositions and methods for manufacture of same.

Polyorganosiloxane-polycarbonates can have a weight average molecular weight of 2,000 Daltons to 100,000 Daltons, specifically 5,000 to 50,000 Daltons as measured by gel permeation chromatography using a crosslinked styrene-divinyl benzene column, at a sample concentration of 1 milligram per milliliter, and as calibrated with polycarbonate standards.

The polyorganosiloxane-polycarbonates can have a melt volume flow rate, measured at 300 °C/1.2 kg, of 1 to 50 cubic centimeters per 10 minutes (cm³/10 min), specifically 2 to 30 cm³/10 min. Mixtures of polyorganosiloxane-polycarbonates of different flow properties can be used to achieve the overall desired flow property.

In specific aspects the polycarbonate-siloxane copolymer has a siloxane content of from about 5 wt% to about 25 wt%, or from about 5 wt% to about 15 wt%, or from about 5 wt% to about 10 wt%, or from about 5 wt% to about 7 wt%, or about 6 wt%. Nonlimiting examples of polysiloxane-polycarbonate copolymers can include various copolymers available from SABIC Innovative plastics. In an aspect, the polysiloxane-polycarbonate copolymer can contain 6 % by weight polysiloxane content based upon the total weight of the polysiloxane-polycarbonate copolymer. In various aspects, the 6 % by weight polysiloxane block copolymer can have a weight average molecular weight (Mw) of from about 23,000 to 24,000 Daltons using gel permeation chromatography with a bisphenol A polycarbonate absolute molecular weight standard. In certain aspects, the 6% weight siloxane polysiloxane-polycarbonate copolymer can have a melt volume flow rate (MVR) of about 10 cm³/ 10 min at 300 °C 11.2 kg (see C9030T, a 6 % by weight polysiloxane content copolymer available from SABIC Innovative Plastics as "transparent" Lexan^{™} EXL C9030T resin polymer). In another example, the polysiloxane-polycarbonate block can include 20 % by weight polysiloxane based upon the total weight of the polysiloxane block copolymer. For example, an appropriate polysiloxane-polycarbonate copolymer can be a bisphenol A polysiloxane-polycarbonate copolymer endcapped with para-cumyl phenol (PCP) and having a 20 % polysiloxane content (see C9030P, commercially available from SABIC as the "opaque" Lexan^{™} EXL C9030P). In various aspects, the weight average molecular weight of the 20 % polysiloxane block copolymer can be about 29,900 Daltons to about 31,000 Daltons when tested according to a polycarbonate standard using gel permeation chromatography (GPC) on a cross-linked styrene-divinylbenzene column and calibrated to polycarbonate references using a UV-VIS detector set at 264 nm on 1 mg/ml samples eluted at a flow rate of about 1.0 ml/minute. Moreover, the 20% polysiloxane block copolymer can have a melt volume rate (MVR) at 300 °C/1.2 kg of 7 cm³/ 10 min and can exhibit siloxane domains sized in a range of from about 5 micron to about 20 micrometers (microns, µm).

In some aspects the at least one thermoplastic polymer includes a polyamide (PA) and/or a polyester (PE). The polyamide may in some aspects be an amorphous polyamide; the polyester may in some aspects be an amorphous polyester.

In a specific aspect the at least one thermoplastic polymer includes an amorphous polyamide, wherein the amorphous polyamide includes PA 6I/6T copolyamide, PA 6-3-T copolyamide, PA bis(3-methyl-4-aminocyclohexyl)methane-n (MACM-n), PA bis(4-aminocyclohexyl)methane-n (PACM-n), copolymers thereof, or combinations thereof.

In further aspects the at least one thermoplastic composition further includes a semi-crystalline polyamide including PA6, PA6/66, PA 11, PA12, or a combination thereof.

In certain aspects the at least one thermoplastic polymer includes an amorphous polyester, wherein the amorphous polyester includes polyethylene terephthalate glycol (PETG), polycyclohexylene dimethylene terephthalate glycol (PCTG), polycyclohexylene dimethylene terephthalate acid (PCTA), polyarylate (PAR), copolymers thereof, or a combination thereof. PETG and PCTG are copolyesters formed by including ethylene glycol (EG) in the polymerization reaction. PETG is formed if less than 50% of the diol content in the copolyester is CHDM; PCTG is formed if greater than 50% of the diol content in the copolyester is CHDM. PCTA is formed by including additional diacids such as isophthalic acid (IPA).

In some aspects the composition includes a polycarbonate-siloxane copolymer in addition to another thermoplastic polymer, such as but not limited to a polycarbonate polymer. In certain aspects the composition includes from about 5 wt% to about 50 wt% of the polycarbonate-siloxane copolymer, or from about 5 wt% to about 45 wt% of the polycarbonate-siloxane copolymer, or from about 5 wt% to about 40 wt% of the polycarbonate-siloxane copolymer, or from about 5 wt% to about 35 wt% of the polycarbonate-siloxane copolymer, or from about 5 wt% to about 30 wt% of the polycarbonate-siloxane copolymer, or from about 5 wt% to about 25 wt% of the polycarbonate-siloxane copolymer, or from about 10 wt% to about 50 wt% of the polycarbonate-siloxane copolymer, or from about 15 wt% to about 50 wt% of the polycarbonate-siloxane copolymer, or from about 10 wt% to about 40 wt% of the polycarbonate-siloxane copolymer, or from about 10 wt% to about 30 wt% of the polycarbonate-siloxane copolymer, or from about 15 wt% to about 25 wt% of the polycarbonate-siloxane copolymer, or about 20 wt% of the polycarbonate-siloxane copolymer.

In other aspects the composition includes from about 0.5 wt% to about 4.5 wt% of the BITO, or from about 0.5 wt% to about 4.0 wt% of the BITO, or from about 0.5 wt% to about 3.5 wt% of the BITO, or from about 0.5 wt% to about 3.0 wt% of the BITO, or from about 0.5 wt% to about 2.5 wt% of the BITO, or from about 0.5 wt% to about 2.0 wt% of the BITO. In specific aspects the BITO includes a powder having a D50 particle size of from about 0.1 micron (µm) to about 10 µm. The BITO may be converted into nano-dispersions during the compounding process in some aspects. In the present disclosure it has found that BITO as an LDS additive provides compositions with improved LDS properties as compared to conventional compositions including yellow indium tin oxide, which is a conventional ITO known for use in LDS compositions. In particular, it has been found that compositions including BITO as the LDS additive have good dispersion in the polymer matrix, high laser activity, excellent near infrared (NIR) absorption properties and have good catalytic activity for copper plating. It has also been found that BITO compositions according to aspects of the disclosure have improved transmittance (higher) and haze (lower) properties as compared to conventional compositions including yellow ITO (YITO). Transmittance and haze may be evaluated on 1 mm injection molded plaques according to ASTM D1003-00. It has also been found that compositions including BITO had improved mechanical properties as compared to conventional compositions including YITO. In particular melt viscosity, impact strength, and tensile strain and tensile strength at break were significantly lower for the YITO compositions, indicating decomposition of the polycarbonate in the composition.

In specific aspects the composition has a transmittance that is at least 10% higher than a comparative composition that includes YITO instead of BITO. In further aspects the composition has a transmittance that is at least 15% higher, or at least 20% higher, or at least 25% higher, or at least 30% higher, or at least 35% higher, or at least 40% higher, or at least 45% higher, or at least 50% higher, or at least 55% higher, than a comparative composition that includes YITO instead of BITO.

In certain aspects the composition has a haze that is at least 20% lower than a comparative composition that includes YITO instead of BITO. In specific aspects the composition has a haze that is at least 25% lower, or at least 30% lower, or at least 35% lower, or at least 40% lower, or at least 45% lower, or at least 50% lower, or at least 55% lower, or at least 60% lower, or at least 65% lower, or at least 70% lower, than a comparative composition that includes YITO instead of BITO.

In further aspects the composition has a melt viscosity that is at least at least 50% higher than a comparative composition that includes YITO instead of BITO. In other aspects the composition has a melt viscosity that is at least at least 60% higher, or at least 70% higher, or at least 80% higher, or at least 90% higher, or at least 100% higher, or at least 110% higher, or at least 120% higher, or at least 130% higher, or at least 140% higher, or at least 150% higher, or at least 160% higher, or at least 170% higher, or at least 180% higher, or at least 190% higher, than a comparative composition that includes YITO instead of BITO.

In some aspects the composition has a notched Izod impact strength that is at least 100% higher than a comparative composition that includes YITO instead of BITO. In specific aspects the composition has a notched Izod impact strength that is at least 200% higher, or at least 300% higher, or at least 400% higher, or at least 500% higher, or at least 600% higher, or at least 700% higher, or at least 800% higher, than a comparative composition that includes YITO instead of BITO.

In particular aspects the composition has a tensile strength at break that is at least 5% higher than a comparative composition that includes YITO instead of BITO. In certain aspects the composition has a tensile strength at break that is at least 10% higher, or at least 15% higher, or at least 20% higher, or at least 25% higher, than a comparative composition that includes YITO instead of BITO.

In further aspects the composition has a tensile strain at break that is at least 100% higher than a comparative composition that includes YITO instead of BITO. In other aspects the composition has a tensile strain at break that is at least 200% higher, or at least 300% higher, or at least 400% higher, or at least 500% higher, or at least 600% higher, than a comparative composition that includes YITO instead of BITO.

In some aspects the composition further includes an additional LDS additive including CuCr₂O₄, Cu₂(OH)PO₄, MgAl₂O₄, ZnAl₂O₄, FeAl₂O₄, CuFe₂O₄, MnFe₂O₄, NiFe₂O₄, TiFe₂O₄, FeCr₂O₄, MgCr₂O₄, SnSb₂O₄, or a combination of thereof.

In further aspects the composition further includes an additive component, such as but not limited to an antioxidant, a heat stabilizer, a ultraviolet (UV) stabilizer, a flame retardant, or a combination thereof. In yet further aspects the composition includes from greater than 0 wt% to about 15 wt% of the additive component. In particular aspects the composition includes from greater than 0 wt% to about 10 wt% of an additive component including an antioxidant, a heat stabilizer, and/or a UV stabilizer.

In some aspects the additive component includes a flame retardant component, such as but not limited to a phosphorous-containing flame retardant. In certain aspects the composition includes from greater than 0 wt% to about 1 wt% of an additive component including a Rimar-salt based flame retardant.

Compositions according to aspects of the disclosure include transparent compositions suitable for use in a laser direct structuring process. In some aspects, transparent can be defined as having a transmission of at least 50% and/or a haze of 35% or lower. Transmission and haze may be evaluated on 1 millimeter (mm) injection molded plaques according to ASTM D1003-00. In further aspects the compositions have a transmission of at least 55%, or at least 60%, or at least 65%, or at least 70%, or at least 75%. In certain aspects the compositions have a haze of 30% or lower, or 25% or lower, or 20% or lower, or 15% or lower, or 10% or lower.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded. In particular aspects the article is a component of an electronic device. Exemplary articles include, but are not limited to, antenna applications for mobile/portable electronic devices, portable and wearable devices, wireless switches, automotive navigation and tracking systems, unmanned aerial vehicles (UAVS), and satellites.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.

Aspect 1. A thermoplastic composition comprising:
from about 60 wt% to about 99.5 wt% of at least one thermoplastic polymer; and
from about 0.5 wt% to about 5 wt% of a laser direct structuring (LDS) additive comprising blue indium tin oxide (BITO),
wherein the thermoplastic composition has a visible transmittance of at least 50% and a haze of 30% or lower as tested in accordance with ASTM D1003-00 at a thickness of 1 millimeter, and
wherein the combined weight percent value of all components does not exceed 100 wt%, and all weight percent values are based on the total weight of the composition.

Aspect 2. The thermoplastic composition according to Aspect 1, wherein the at least one thermoplastic polymer comprises polycarbonate (PC), polyamide (PA), polyester (PE), polyetherimide (PEI), polyphenylsufone (PPSU), polyethersulfone (PES), polysulfone (PSU), polyarylate (PAR), copolymers thereof, or combinations thereof.

Aspect 3. The thermoplastic composition according to Aspect 2, wherein the at least one thermoplastic polymer comprises a polycarbonate copolymer.

Aspect 4. The thermoplastic composition according to Aspect 3, wherein the polycarbonate copolymer comprises a polycarbonate-siloxane copolymer having a siloxane content of from about 5 wt% to about 25 wt%.

Aspect 5. The thermoplastic composition according to any of Aspects 2 to 4, wherein the polyamide is an amorphous polyamide or the polyester is an amorphous polyester.

Aspect 6. The thermoplastic composition according to any of Aspects 1 to 5, wherein the at least one thermoplastic polymer comprises an amorphous polyamide, wherein the amorphous polyamide comprises PA 6I/6T copolyamide, PA 6-3-T copolyamide, PA bis(3-methyl-4-aminocyclohexyl)methane-n (MACM-n), PA bis(4-aminocyclohexyl)methane-n (PACM-n), copolymers thereof, or combinations thereof.

Aspect 7. The thermoplastic composition according to Aspect 6, wherein the at least one thermoplastic composition further comprises a semi-crystalline polyamide comprising PA6, PA6/66, PA11, PA12, or a combination thereof.

Aspect 8. The thermoplastic composition according to any of Aspects 1 to 7, wherein the at least one thermoplastic polymer comprises an amorphous polyester, wherein the amorphous polyester comprises polyethylene terephthalate glycol (PETG), polycyclohexylene dimethylene terephthalate glycol (PCTG), polycyclohexylene dimethylene terephthalate acid (PCTA), polyarylate (PAR), copolymers thereof, or a combination thereof.

Aspect 9. The thermoplastic composition according to any of Aspects 1 to 8, wherein the BITO comprises a powder having a D50 particle size of from about 0.1 micron (µm) to about 10 µm.

Aspect 10. The thermoplastic composition according to any of Aspects 1 to 9, wherein the composition further comprises an additional LDS additive comprising CuCr₂O₄, Cu₂(OH)PO₄, MgAl₂O₄, ZnAl₂O₄, FeAl₂O₄, CuFe₂O₄, MnFe₂O₄, NiFe₂O₄, TiFe₂O₄, FeCr₂O₄, MgCr₂O₄, SnSb₂O₄, or a combination of thereof.

Aspect 11. The thermoplastic composition according to any of Aspects 1 to 10, wherein the composition further comprises an additive component.

Aspect 12. The thermoplastic composition according to Aspect 11, wherein the additive component comprises an antioxidant, a heat stabilizer, a UV stabilizer, a flame retardant, or a combination thereof.

Aspect 13. The thermoplastic composition according to Aspect 11 or 12, wherein the composition further comprises from greater than 0 wt% to about 15 wt% of the additive component.

Aspect 14. The thermoplastic composition according to any of Aspects 11 to 13, wherein the additive component comprises a flame retardant component, wherein the flame retardant component comprises a phosphorous-containing flame retardant.

Aspect 15. The thermoplastic composition according to any of Aspects 11 to 14, wherein the thermoplastic composition comprises from greater than 0 wt% to about 1 wt% of an additive component comprising a Rimar-salt based flame retardant.

Aspect 16. The thermoplastic composition according to any of Aspects 1 to 15, wherein the composition is a transparent composition suitable for use in a laser direct structuring process.

Aspect 17. An article comprising the thermoplastic composition according to any of Aspects 1 to 16.

Aspect 18. The article according to Aspect 16, wherein the article is a component of an electronic device.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Compositions described herein included materials selected from Table 1:

**Table 1 - Materials**

| **Item Description** | **Chemical Description** | **Source** |
|---|---|---|
| 100 GRADE PCP | Low flow polycarbonate homopolymer | SABIC |
| PCP 1300 | High flow polycarbonate homopolymer | SABIC |
| C9030T | Transparent polycarbonate/siloxane copolymer, 6 wt% siloxane | SABIC |
| Grivory^{®} G21 amorphous PA6I/6T | Polyphthalamide | EMS |
| Tritan^{™} TX1000 copolyester | Polyester | Eastman |
| ULTEM^{®} 1010 PEI | Low flow polyetherimide | SABIC |
| ULTEM^{®} 1040 PEI | High flow polyetherimide | SABIC |
| CRS5011 PEI copolymer | Polyetherimide copolymer | SABIC |
| R5100NT PPSU | Polyphenylsulfone | Solvay |
| ULTRASON^{®} E2010 PES | Polyarylethersulfone | BASF |
| Udel^{®} P-1700 NT 11 PSU | Polysulfone | Solvay |
| IRIOTEC^{®} 8840 | Copper hydroxide phosphate | Merck Chemical |
| IRASORB BITO | Blue indium tin oxide | Keeling & Walker |
| IRASORB YITO | Yellow indium tin oxide | Keeling & Walker |
| IRGAFOS^{®} 168 antioxidant | Tris(2,4-di-tert-butylphenyl) phosphite | BASF |
| IRGAFOS^{®} 1010 antioxidant | Pentaerythritol tetrakis (3-(3,5-di-tert-butyl-4-hydroxyphenyl) propionate) | BASF |
| UV stabilizer UV-329 | 2-(2'-Hydroxy-5'-tert-octylphenyl)benzotriazole | JINWEI Chemical |
| IRGANOX^{®} 1098 antioxidant | N,N'-hexane-1,6-diylbis (3- (3,5-di-tert-butyl-4-hydroxyphenylpropionamide)) | BASF |

The compounding experiment was implemented on a lab twin-screw extruder. The base resin and additives were pre-blended and fed from the main throat. The extrusion process was performed with a screw rotation speed at 250 RPM and output of 30 kg/h. The compounding temperature profiles are shown in Table 2 and the molding conditions are shown in Table 3.

**Table 2 - Compounding Profile**

| | **Unit** | **C1, E1-E4, C2** | **E5-E6** | **E7-E12** |
|---|---|---|---|---|
| Compounder Type | | TEM-37BS | | |
| Barrel Size | mm | 1500 | 1500 | 1500 |
| Die | mm | 3 | 3 | 3 |
| Zone 1 Temp | °C | 50 | 50 | 50 |
| Zone 2 Temp | °C | 220 | 220 | 255 |
| Zone 3 Temp | °C | 260 | 260 | 300 |
| Zone 4 Temp | °C | 260 | 265 | 360 |
| Zone 5 Temp | °C | 260 | 265 | 360 |
| Zone 6 Temp | °C | 260 | 265 | 360 |
| Zone 7 Temp | °C | 260 | 265 | 360 |
| Zone 8 Temp | °C | 260 | 265 | 360 |
| Zone 9 Temp | °C | 260 | 265 | 360 |
| Zone 10 Temp | °C | 260 | 265 | 360 |
| Zone 11 Temp | °C | 260 | 265 | 360 |
| Die Temp | °C | 260 | 265 | 360 |
| Screw speed | rpm | 300 | 300 | 300 |
| Throughput | Kg/hr | 30 | 30 | 30 |

**Table 3 - Injection Molding Conditions**

| | **Unit** | **C1, E1-E4, C2** | **E5-E6** | **E7-E12** |
|---|---|---|---|---|
| Pre-drying time | Hour | 4 | 4 | 4 |
| Pre-drying temp | °C | 120 | 150 | 150 |
| Zone 1 temp | °C | 270 | 270 | 350 |
| Zone 2 temp | °C | 270 | 280 | 360 |
| Zone 3 temp | °C | 270 | 280 | 370 |
| Zone 4 temp | °C | 270 | 280 | 370 |
| Nozzle temp | °C | 270 | 280 | 370 |
| Mold temp | °C | 130 | 80 | 160 |
| Screw speed | rpm | 100 | 100 | 100 |
| Back pressure | kgf/cm² | 30 | 30 | 30 |
| Cooling time | s | 30 | 30 | 30 |
| Shot volume | mm | 45 | 40 | 45 |
| Injection speed | mm/s | 50 | 50 | 50 |
| Holding pressure | kgf/cm² | 600 | 600 | 600 |
| Max. injection pressure | kgf/cm² | 1200 | 1000 | 1000 |

Melt volume rate (MVR) was measured using ASTM D1238 at the specified temperatures and loading. Tensile properties tests were measured according to ASTM D638 method at a speed of 5 millimeters per minute (mm/min). Izod impact tests were performed according to ASTM D256 (notched) and ASTM D4812 (unnotched) at room temperature (23 °C), with a pendulum energy of 5 pound-force per foot (lbf/ft). Specific gravity was measured by an immersion method for solid plastics part according to ASTM D792. Heat deflection temperatures were determined using method ASTM D648, under a 0.45 megapascal (MPa) or 1.8 MPa stress with a part thickness of 3.2 mm. Dielectric constant (Dk) and dissipation factor (Df) were tested using a split post dielectric resonator (SPDR) and network analyzer at a frequency of 1.9 gigahertz (GHz). Transmittance and haze evaluated on 1 mm injection molded plaques according to ASTM D1003-00. Plating index was tested following LPKF guidelines with MacDermid Copper 100 as the chemical plating solution. Plating index is defined as the ratio of copper thickness of the testing sample to that of a reference stick X_{ref}. Various laser parameters combination (power, frequency, speed) used to evaluate the platability of the material.

Example and comparative compositions were prepared as shown in Table 4:

**Table 4 - Comparative and Example Compositions**

| **Item Description** | **C1** | **E1** | **E2** | **E3** | **E4** | **C2** |
|---|---|---|---|---|---|---|
| 100 GRADE PCP | 39.2 | 39.2 | 38.9 | 37.9 | 36.9 | 37.9 |
| PCP 1300 | 40 | 40 | 40 | 40 | 40 | 40 |
| C9030T | 20 | 20 | 20 | 20 | 20 | 20 |
| IRGAFOS^{®} 168 antioxidant | 0.05 | 0.05 | 0.05 | 0.05 | 0.05 | 0.05 |
| IRGAFOS^{®} 1010 antioxidant | 0.05 | 0.05 | 0.05 | 0.05 | 0.05 | 0.05 |
| Copper Hydroxide Phosphate | 0.7 | | | | | |
| IRASORB BITO | | 0.7 | 1 | 2 | 3 | |
| IRASORB YITO | | | | | | 2 |

Amounts in this and subsequent examples are listed in weight percent (wt%). To improve ductility at low temperatures a transparent PC/siloxane copolymer (C9030T) was included with conventional polycarbonate homopolymer. Composition C1 included a conventional LDS additive (copper hydroxide phosphate). Other conventional LDS additives include copper chromium oxide spinel and antimony tin oxide. The example compositions included blue indium tin oxide (BITO) as a LDS additive, which has a typical composition of 90 wt% indium oxide and 10 wt% tin oxide. BITO has good chemical stability, high transparency in the visible spectra region and strong absorption from a 1064 nm laser. The BITO was in a form of agglomerated powder with a particle size of 5.0 micron (µm) (D50), but can be further converted into nano-dispersions (below 100 nanometer (nm)) during processing. Accordingly it was believed that BITO could be a good candidate for optically transparent LDS applications.

Properties of the Table 4 compositions were evaluated and are shown in Table 5:

**Table 5 - Properties of Table 4 Compositions**

| **Property** | **Unit** | **C1** | **E1** | **E2** | **E3** | **E4** | **C2** |
|---|---|---|---|---|---|---|---|
| MVR (260°C, 2.16 kg) | cm³/10min | 5.6 | 5.4 | 5.5 | 5.7 | 5.7 | 31.2 |
| Melt Viscosity (260°C,1000 s⁻¹) | Pa.s | 654 | 701 | 686 | 632 | 600 | 214 |
| Specific Gravity | g/cm³ | 1.192 | 1.193 | 1.195 | 1.207 | 1.218 | 1.211 |
| Tensile Modulus | MPa | 2192 | 2214 | 2176 | 2100 | 2134 | 2415 |
| Tensile Strength @ break | MPa | 58 | 57 | 58 | 60 | 57 | 47 |
| Tensile Strain @ break | % | 85 | 89 | 85 | 93 | 82 | 12 |
| Notched Izod Impact | J/m | 890 | 940 | 938 | 931 | 910 | 95 |
| Unnotched Izod Impact | J/m | NB | NB | NB | NB | NB | NB |
| Dielectric Constant (1.9GHz) | / | 2.89 | 2.9 | 2.91 | 2.94 | 2.94 | 2.98 |
| Dielectric Loss (1.9Ghz) | / | 0.0052 | 0.0056 | 0.0056 | 0.0055 | 0.0054 | 0.0064 |
| Transmittance (1mm) | % | 58.4 | 79.6 | 77 | 68.2 | 60 | 43.1 |
| Haze | % | 97 | 8.2 | 11.3 | 19.9 | 27.9 | 75.8 |
| Best Plating Index | / | 0.84 | 0.69 | 0.65 | 0.64 | 0.8 | 0.86 |

| | | | | | | | |
|---|---|---|---|---|---|---|---|
| *NB= no break | | | | | | | |

Due to the low concentration of LDS additive, all the compositions maintained excellent ductility in terms of high impact strength (NII) around 900 joules per meter (J/m) and tensile strain of 57% to 60% at break. All compositions had a low dielectric constant around 2.9 and low loss factor; these values are believed to be favorable to antenna radio frequency performance. Of note compositions E1-E4 including BITO had much lower haze and higher transmittance at a 1 mm thickness. For example, comparative composition C1 had a transmittance of 58.4% but a very high haze of 97%. In contrast example composition E1 including the same amount of BITO LDS additive had a much higher transmittance close to 80% and a lower haze of only 8.2%. Further, as the BITO concentration increased to 1%, 2%, and 3%, the compositions still maintained a transmittance above 60% and good plating performance with a plating index up to 0.8 under the best laser parameters, indicating good performance and broad design space for use as transparent LDS materials. While not intending to be bound by theory, it is thought that the laser activation mechanism of BITO could be similar to that of antimony tin oxide (ATO), which involves laser etching to expose itself on the surface and act as a catalyst to directly initiate electroless chemical plating. Additionally, another ITO species, YITO (yellow indium tin oxide) of the same physical status and particle size as BITO was incorporated in composition C2 to be compared with E3 at the same loading level (2%). Transmittance dropped to 43.1% at 1 mm thickness and notably haze increased to 75.8%, demonstrating that compositions according to aspects of the disclosure that include BITO have improved transmission (higher) and haze (lower) properties as compared to compositions including conventional yellow ITO. Further, the presence of YITO resulted in PC decomposition as indicated by the significant decrease in melt viscosity, impact strength, and tensile elongation at break.

Additional compositions were prepared as shown in Table 6:

**Table 6 -Polyester-Based Compositions**

| **Item Description** | **E5** | **E6** |
|---|---|---|
| Grivory^{®} G21 amorphous PA6I/6T | 97.9 | |
| Tritan^{™} TX1000 copolyester | | 97.9 |
| IRGANOX^{®} 1098 antioxidant | 0.05 | 0.05 |
| IRGAFOS^{®} 168 antioxidant | 0.05 | 0.05 |
| IRASORB BITO | 2 | 2 |

The compositions included amorphous polyamide PA6I/6T, which is polymerized by the condensation of hexamethylenediamine, terephthalic acid, and isophthalic acid (above 65% acid monomer). The compositions also included Tritan^{™} TX1000, which is an amorphous copolyester.

Properties of the Table 6 compositions are shown in Table 7:

**Table 7 - Properties of Table 6 Compositions**

| **Property** | **Unit** | **E5** | **E6** |
|---|---|---|---|
| MVR (270°C, 2.16 kg) | cm³/10 min | 5.6 | 6.8 |
| Melt Viscosity (270°C, 1000 s⁻¹) | Pa.s | 245 | 416 |
| Specific Gravity | g/cm³ | 1.192 | 1.186 |
| Tensile Modulus | MPa | 2900 | 1550 |
| Tensile Strength @ break | MPa | 84 | 41 |
| Tensile Strain @ break | % | 21 | 92 |
| Notched Izod Impact | J/m | 95 | NB |
| Unnotched Izod Impact | J/m | NB | NB |
| Dielectric Constant (1.9GHz) | / | 3.36 | 2.86 |
| Dielectric Loss (1.9Ghz) | / | 0.016 | 0.0073 |
| Transmittance (1mm) | % | 65.4 | 64.3 |
| Haze | % | 26.8 | 77.2 |
| Best Plating Index | / | 0.63 | 0.66 |

| | | | |
|---|---|---|---|
| *NB= no break | | | |

With 2% BITO as an LDS additive, composition E5 based on PA6I/6T exhibited higher tensile strength but much lower notched impact strength due to the presence of 50% rigid aromatic backbone structure, and the asymmetric chemical structure of 6T and high polarity amide groups significantly raised the dielectric constant and loss factor to 3.36 and 0.016, respectively. Amorphous polyester LDS composition E6 based on polycyclohexylene dimethylene terephthalate glycol (PCTG) had excellent toughness (high tensile strain of approximately 90%) and superior impact strength without break. The transparent polyamide and polyester LDS compositions each demonstrated similar transmittance and plating performance compared to transparent PC LDS composition E3 at the same BITO concentration of 2%, while the haze of E6 sharply increased, which is believed to be due to inappropriate processing conditions and poor BITO dispersion.

Additional compositions were prepared as shown in Table 8:

**Table 8 - High Heat Amorphous Thermoplastic Transparent LDS Compositions**

| **Item Description** | **E7** | **E8** | **E9** | **E10** | **E11** | **E12** |
|---|---|---|---|---|---|---|
| ULTEM^{®} 1010 PEI | 97.9 | | | | | |
| ULTEM^{®} 1040 PEI | | 97.9 | | | | |
| CRS5011 PEI copolymer | | | 97.9 | | | |
| R5 100NT PPSU | | | | 97.9 | | |
| ULTRASON^{®} E2010 PES | | | | | 97.9 | |
| Udel^{®} P-1700 NT 11 PSU | | | | | | 97.9 |
| IRGAFOS^{®} 168 antioxidant | 0.05 | 0.05 | 0.05 | 0.05 | 0.05 | 0.05 |
| 1RGANOX^{®} 1098 antioxidant | 0.05 | 0.05 | 0.05 | 0.05 | 0.05 | 0.05 |
| IRASORB BITO | 2 | 2 | 2 | 2 | 2 | 2 |

The compositions included moderate viscosity polyetherimide (PEI) resin ULTEM^{®} 1010, high viscosity PEI resin ULTEM^{®} 1040, modified PEI copolymer ULTEM^{®} CRS 5011, polyphenylsulfone (PPSU) resin RS100NT, polyethersulfone (PES) resin ULTRASON^{®} E2010, and polysulfone (PSU) resin Udel^{®} P1700 NT. Each composition included 2 wt% BITO. Properties of the Table 8 compositions are shown in Table 9:

**Table 9 - Properties of Table 8 Compositions**

| **Property** | **Unit** | **E7** | **E8** | **E9** | **E10** | **E11** | **E12** |
|---|---|---|---|---|---|---|---|
| MVR (360°C, 5 kg) | cm³/10 min | 28.6 | 120.9 | 21.7 | 23.2 | 41.3 | 26.4 |
| Melt Viscosity (350°C, 1000 s⁻¹) | Pa.s | 558 | 202 | 602 | 703 | 462 | 512 |
| Specific Gravity | g/cm³ | 1.294 | 1.296 | 1.296 | 1.312 | 1.387 | 1.252 |
| Tensile Modulus | MPa | 3265 | 3330 | 3142 | 2241 | 2611 | 2468 |
| Tensile Strength @ break | MPa | 84 | 103 | 82.5 | 67.6 | 62 | 55 |
| Tensile Strain @ break | % | 24.3 | 6.4 | 28.2 | 79 | 62.8 | 67.8 |
| HDT @0.45 MPa | °C | 205 | 201 | 212 | 211 | 215 | 180 |
| HDT @1.8 MPa | °C | 190 | 186 | 196 | 195 | 200 | 170 |
| Notched Izod Impact | J/m | 42.6 | 34.1 | 53.1 | 703 | 77.2 | 70.4 |
| Unnotched Izod Impact | J/m | NB | 1050 | NB | NB | NB | NB |
| Dielectric Constant (1.9GHz) | / | 3.16 | 3.13 | 3.13 | 3.3 | 3.53 | 3.09 |
| Dielectric Loss (1.9Ghz) | / | 0.0036 | 0.0035 | 0.0042 | 0.007 | 0.011 | 0.0056 |
| Transmittance (1mm) | % | 56.3 | 55.8 | 52.4 | 61.4 | 59.5 | 61.7 |
| Haze | % | 15.6 | 8.9 | 12.2 | 17.2 | 25.9 | 29.6 |
| Best Plating Index | / | 0.31 | 0.46 | 0.74 | <0.05 | <0.05 | <0.05 |

Example compositions E7-E12 had a much higher heat resistance (HDT above 180 °C) than the polycarbonate, amorphous (co)polyamide or (co)polyester based materials. PEI-based compositions E7-E9 had lower impact strength and tensile strain properties as compared to compositions E10-E12, but the dielectric properties, optical transmittance and haze properties were good. Compositions E7 and E8 had lower plating performance compared to PC and amorphous nylon compositions with the highest plating index of only 0.31 and 0.46, respectively. However, the plating index of composition E9 including PEI copolymer was greatly improved. In addition, the transmittance of the PEI-based compositions E7-E9 were lower than other compositions due to stronger light absorption in the visible region.

Among the sulfone polymers of compositions E10-E12, it was observed that PPSU, PES, and PSU exhibited similar transmittance, and the PPSU composition (E10) had the lowest haze and a very high impact strength. The sulfone-based compositions E10-E12 all had poor LDS plating performance with the best plating index less than 0.05. These compositions would not be considered to be good candidates for transparent LDS materials, with PES-based composition E11 also having a high dielectric constant and loss factor.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
from about 60 wt% to about 99.5 wt% of at least one thermoplastic polymer; and
from about 0.5 wt% to about 5 wt% of a laser direct structuring (LDS) additive comprising blue indium tin oxide (BITO),
wherein the thermoplastic composition has a visible transmittance of at least 50% and a haze of 30% or lower as tested in accordance with ASTM D1003-00 at a thickness of 1 millimeter, and
wherein the combined weight percent value of all components does not exceed 100 wt%, and all weight percent values are based on the total weight of the composition.

2. The thermoplastic composition according to claim 1, wherein the at least one thermoplastic polymer comprises polycarbonate (PC), polyamide (PA), polyester (PE), polyetherimide (PEI), polyphenylsufone (PPSU), polyethersulfone (PES), polysulfone (PSU), polyarylate (PAR), copolymers thereof, or combinations thereof.

3. The thermoplastic composition according to claim 2, wherein the at least one thermoplastic polymer comprises a polycarbonate copolymer.

4. The thermoplastic composition according to claim 3, wherein the polycarbonate copolymer comprises a polycarbonate-siloxane copolymer having a siloxane content of from about 5 wt% to about 25 wt%.

5. The thermoplastic composition according to any of claims 1 to 4, wherein the at least one thermoplastic polymer comprises an amorphous polyamide, wherein the amorphous polyamide comprises PA 6I/6T copolyamide, PA 6-3-T copolyamide, PA bis(3-methyl-4-aminocyclohexyl)methane-n (MACM-n), PA bis(4-aminocyclohexyl)methane-n (PACM-n), copolymers thereof, or combinations thereof.

6. The thermoplastic composition according to claim 5, wherein the at least one thermoplastic composition further comprises a semi-crystalline polyamide comprising PA6, PA6/66, PA11, PA12, or a combination thereof.

7. The thermoplastic composition according to any of claims 1 to 6, wherein the at least one thermoplastic polymer comprises an amorphous polyester, wherein the amorphous polyester comprises polyethylene terephthalate glycol (PETG), polycyclohexylene dimethylene terephthalate glycol (PCTG), polycyclohexylene dimethylene terephthalate acid (PCTA), polyarylate (PAR), copolymers thereof, or a combination thereof.

8. The thermoplastic composition according to any of claims 1 to 7, wherein the BITO comprises a powder having a D50 particle size of from about 0.1 micron (µm) to about 10 µm.

9. The thermoplastic composition according to any of claims 1 to 8, wherein the composition further comprises an additional LDS additive comprising CuCr₂O₄, Cu₂(OH)PO₄, MgAl₂O₄, ZnAl₂O₄, FeAl₂O₄, CuFe₂O₄, MnFe₂O₄, NiFe₂O₄, TiFe₂O₄, FeCr₂O₄, MgCr₂O₄, SnSb₂O₄, or a combination of thereof.

10. The thermoplastic composition according to any of claims 1 to 10, wherein the composition further comprises an additive component comprising an antioxidant, a heat stabilizer, a UV stabilizer, a flame retardant, or a combination thereof.

11. The thermoplastic composition according to claim 10, wherein the composition further comprises from greater than 0 wt% to about 15 wt% of the additive component.

12. The thermoplastic composition according to claim 10 or 11, wherein the additive component comprises a flame retardant component, wherein the flame retardant component comprises a phosphorous-containing flame retardant.

13. The thermoplastic composition according to any of claims 10 to 12, wherein the thermoplastic composition comprises from greater than 0 wt% to about 1 wt% of an additive component comprising a Rimar-salt based flame retardant.

14. The thermoplastic composition according to any of claims 1 to 15, wherein the composition is a transparent composition suitable for use in a laser direct structuring process.

15. An article comprising the thermoplastic composition according to any of claims 1 to 14, wherein the article is a component of an electronic device.
